# EUROPÄISCHE PATENTSCHRIFT

(11) **EP 2 726 336 B1**
(45) Veröffentlichungstag und Bekanntmachung des Hinweises auf die Patenterteilung: **03.04.2019**
(21) Anmeldenummer: 12723178.5
(22) Anmeldetag: 22.05.2012
(51) Int. Cl.: B60S 1/38

(54) **WISCHVORRICHTUNG**
WIPING DEVICE
DISPOSITIF D'ESSUYAGE

(30) Priorität: 28.06.2011 DE 102011078199
(43) Veröffentlichungstag der Anmeldung: 07.05.2014
(73) Patentinhaber: Robert Bosch GmbH, 70442 Stuttgart (DE)
(72) Erfinder: HERINCKX, Dirk, B-3350 Linter (BE); DEPONDT, Helmut, B-3010 Kessel-Lo (BE); BEX, Koen, B-3890 Jeuk (BE)
(86) Internationale Anmeldenummer: PCT/EP2012/059487
(87) Internationale Veröffentlichungsnummer: WO 2013/000634

(56) Entgegenhaltungen:
- EP-A1- 2 177 407
- WO-A1-2010/016000
- DE-T5-112006 002 002
- FR-A1- 2 893 896
- US-A1- 2010 037 417

## Beschreibung

### Stand der Technik

Es ist bereits eine Wischvorrichtung, insbesondere eine Kraftfahrzeugscheibenwischvorrichtung, mit einem Wischblattadapter, der zumindest ein Rastelement aufweist, das dazu vorgesehen ist, in einem montierten Zustand eine Bewegung des Wischblattadapters relativ zu einem Halteelement in eine Längsrichtung zu vermeiden, bekannt.

Aus der WO 2010/016000 ist weiterhin eine Wischvorrichtung nach dem Oberbegriff des Anspruchs 1 bekannt.

### Offenbarung der Erfindung

Die Erfindung geht aus von einer Wischvorrichtung, insbesondere von einer Kraftfahrzeugscheibenwischvorrichtung, mit einem Wischblattadapter, der zumindest ein Rastelement aufweist, das dazu vorgesehen ist, in einem montierten Zustand eine Bewegung des Wischblattadapters relativ zu einem Halteelement in eine Längsrichtung zu vermeiden.

Es wird vorgeschlagen, dass die Wischvorrichtung zumindest ein Sicherungsmittel aufweist, das dazu vorgesehen ist, das zumindest eine Rastelement in einem montierten Zustand zu sichern, wodurch eine Betriebssicherheit vorteilhaft erhöht werden kann. Unter einem "Wischblattadapter" soll in diesem Zusammenhang insbesondere ein Adapter verstanden werden, der einen Kontaktbereich zu einem Wischblattbauteil aufweist und mit dem Wischblattbauteil unverlierbar verbunden und dazu vorgesehen ist, einen Kopplungsbereich des Wischblattbauteils für eine Kopplung und/oder Kontaktierung mit einem Wischarmadapter bereitzustellen. Unter einem "Rastelement" soll in diesem Zusammenhang insbesondere ein federelastisches Element zur Herstellung einer Rastverbindung verstanden werden, das dazu vorgesehen ist, bei einer Montage elastisch ausgelenkt zu werden. Unter einem "Halteelement" soll dabei in diesem Zusammenhang insbesondere ein Element verstanden werden, das dazu vorgesehen ist, ein Windabweiserelement, ein Federelement und eine Wischleiste formschlüssig zu verbinden. Unter einem "Windabweiserelement" soll in diesem Zusammenhang insbesondere ein Element verstanden werden, das dazu vorgesehen ist, einen auf die Wischvorrichtung wirkenden Fahrtwind abzuweisen und/oder für ein Anpressen einer Wischleiste auf eine Fahrzeugscheibe zu nutzen. Unter einer "Wischleiste" soll in diesem Zusammenhang insbesondere eine Leiste verstanden werden, die dazu vorgesehen ist, eine Fahrzeugscheibe zu wischen. Unter einem "Federelement" soll in diesem Zusammenhang insbesondere ein federelastisches Element verstanden werden, das zumindest eine Erstreckung aufweist, die in einem normalen Betriebszustand um zumindest 10 %, insbesondere um wenigstens 20 %, vorzugsweise um mindestens 30 % und besonders vorteilhaft um zumindest 50 % elastisch veränderbar ist, und das insbesondere eine von einer Veränderung der Erstreckung abhängige und vorzugsweise zu der Veränderung proportionale Gegenkraft erzeugt, die der Veränderung entgegenwirkt. Unter einer "Längsrichtung" soll in diesem Zusammenhang insbesondere eine Richtung verstanden werden, die sich im Wesentlichen parallel zu einer Längserstreckung des Halteelements erstreckt. Unter einer "Längserstreckung" soll in diesem Zusammenhang insbesondere eine größtmögliche Erstreckung verstanden werden. Unter "im Wesentlichen" soll in diesem Zusammenhang insbesondere eine Abweichung von weniger als 10°, bevorzugt weniger als 5° verstanden werden. Unter einer "Erstreckung" eines Elements soll in diesem Zusammenhang insbesondere ein maximaler Abstand zweier Punkte einer senkrechten Projektion des Elements auf eine Ebene verstanden werden. Unter "sichern" soll in diesem Zusammenhang insbesondere in einer festgelegten Position halten und/oder verriegeln verstanden werden. Unter "vorgesehen" soll insbesondere speziell ausgelegt und/oder ausgestattet verstanden werden.

In einer weiteren Ausgestaltung der Erfindung wird vorgeschlagen, dass das zumindest eine Rastelement an zumindest einem Federelement in einem montierten Zustand seitlich anliegt, wodurch eine besonders kompakte Bauform der Wischvorrichtung erzielt werden kann. Unter "seitlich" soll in diesem Zusammenhang insbesondere in einer Wischrichtung betrachtet verstanden werden. Unter einer "Wischrichtung" soll in diesem Zusammenhang insbesondere eine Richtung verstanden werden, in welche sich die Wischvorrichtung in einem Betriebszustand relativ zu einer zu wischenden Oberfläche bewegt. Bevorzugt erstreckt sich die Wischrichtung parallel zu einer zu wischenden Oberfläche und/oder senkrecht zu einer Hauptausrichtung der Wischleiste.

Ferner wird vorgeschlagen, dass das zumindest eine Rastelement dazu vorgesehen ist, bei einer Montage zumindest im Wesentlichen in eine Wischrichtung ausgelenkt zu werden, wodurch eine besonders kompakte Bauform bei gleichzeitig hoher Betriebssicherheit erreicht werden kann.

In einer weiteren Ausgestaltung der Erfindung wird vorgeschlagen, dass das zumindest eine Rastelement zumindest zwei Rastarme aufweist, die mit dem Wischblattadapter verbunden und dazu vorgesehen sind, federelastisch ausgelenkt zu werden, wodurch das Rastelement besonders hohe Kräfte aufnehmen und an den Wischblattadapter übertragen kann.

Des Weiteren wird vorgeschlagen, dass das zumindest eine Sicherungsmittel widerhakenförmig ausgebildet ist, wodurch eine besonders schnelle Montage der Wischvorrichtung erreicht werden kann.

Ferner wird vorgeschlagen, dass das zumindest eine Sicherungsmittel mit dem Rastelement gekoppelt ist, so dass bei einem Auslenken des Rastelements das Rastelement in Anlage mit dem zumindest einen Sicherungsmittel kommt und dieses dabei elastisch auslenkt. Dadurch kann eine vorteilhaft einfache und schnelle Montage der Wischvorrichtung erreicht werden.

In einer weiteren Ausgestaltung der Erfindung wird vorgeschlagen, dass die Wischvorrichtung ein Halteelement aufweist, das dazu vorgesehen ist, den Wischblattadapter mit einer Wischleiste und/oder einem Federelement zu koppeln, wodurch die Wischvorrichtung besonders stabil ausgebildet werden kann.

Weist das Halteelement zumindest eine Befestigungsausnehmung auf, in die das zumindest eine Rastelement in einem montierten Zustand formschlüssig eingreift, kann eine besonders einfache Montage der Wischvorrichtung erreicht werden.

Ferner wird vorgeschlagen, dass die Befestigungsausnehmungen zumindest teilweise in einer Seitenwandung, die einen Längsführungskanal seitlich begrenzt, angeordnet sind, wodurch ein besonders kompakter Aufbau der Wischvorrichtung erreicht werden kann. Unter einem "Längsführungskanal" soll in diesem Zusammenhang insbesondere ein Führungskanal verstanden werden, der sich parallel zu einer Längsrichtung des Halteelements erstreckt. Bevorzugt umfasst der Längsführungskanal einen Freiraum sowie zumindest eine den Freiraum begrenzende Kanalwand.

### Zeichnungen

Weitere Vorteile ergeben sich aus der folgenden Zeichnungsbeschreibung. In der Zeichnung sind drei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht einer erfindungsgemäßen Wischvorrichtung mit einem Wischblattadapter und einem Halteelement,
- Fig. 2: eine Schnittdarstellung des Halteelements nach Figur 1,
- Fig. 3: eine perspektivische Detailansicht des Wischblattadapters und des Halteelements nach Figur 1,
- Fig. 4: eine Draufsicht eines weiteren Ausführungsbeispiels eines Halteelements einer erfindungsgemäßen Wischvorrichtung,
- Fig. 5: eine Draufsicht auf das Halteelement nach Figur 4 mit einem Wischblattadapter,
- Fig. 6: eine Draufsicht eines weiteren Ausführungsbeispiels eines Halteelements einer erfindungsgemäßen Wischvorrichtung,
- Fig. 7: einen Teilschnitt eines Wischblattadapters mit dem Halteelement der Wischvorrichtung nach Figur 6,
- Fig. 8: eine schematische Darstellung von Rastelementen des Wischblattadapters nach Figur 6 in einem geöffneten Zustand und
- Fig. 9: eine schematische Darstellung von Rastelementen des Wischblattadapters nach Figur 6 in einem verriegelten Zustand.

### Beschreibung der Ausführungsbeispiele

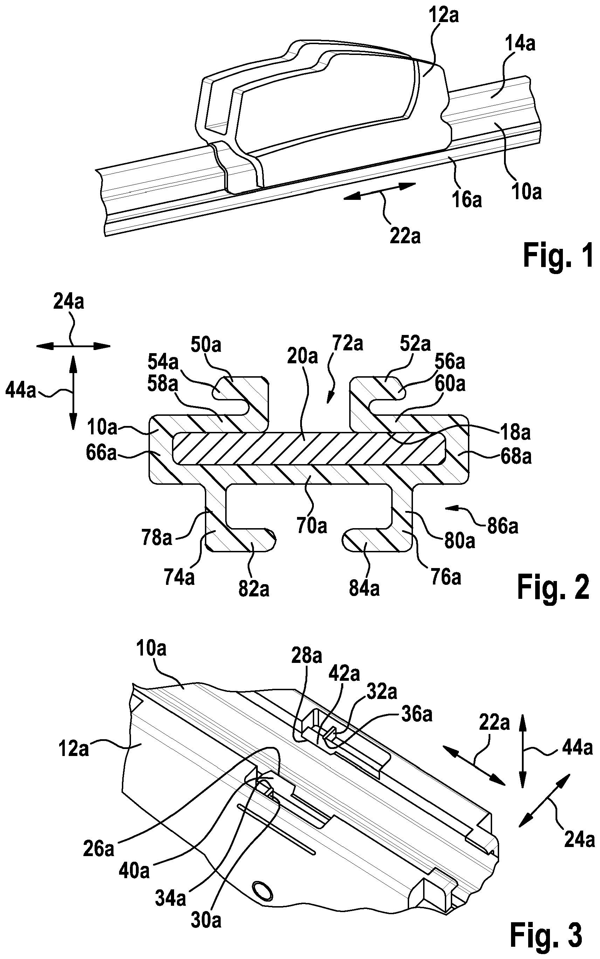

Figur 1 zeigt eine perspektivische Ansicht einer erfindungsgemäßen Wischvorrichtung mit einem Halteelement 10a, einem Wischblattadapter 12a, einem Windabweiserelement 14a und einer Wischleiste 16a in einem montierten Zustand. Der Wischblattadapter 12a, das Windabweiserelement 14a und die Wischleiste 16a sind am Halteelement 10a befestigt. Der Wischblattadapter 12a ist dazu vorgesehen, mit einem Wischerarm (nicht dargestellt) gekoppelt zu werden. Über das Halteelement 10a wird die Wischleiste 16a in einem Betriebszustand, d.h. wenn der Wischerarm eine Wischbewegung ausführt, über eine zu wischende Oberfläche (nicht dargestellt) bewegt. Bei einem Auftreffen von Fahrtwind weist das Windabweiserelement 14a diesen ab und presst die Wischvorrichtung auf die zu wischende Oberfläche.

Figur 2 zeigt das Halteelement 10a, das einen Längsführungskanal 18a zur Führung eines Federelements 20a aufweist, in einer Schnittdarstellung. Die Schnittebene verläuft senkrecht zu einer Längsrichtung 22a des Halteelements 10a. Das Halteelement 10a weist zwei Windabweiserbefestigungselemente 50a, 52a auf. Die Windabweiserbefestigungselemente 50a, 52a sind einstückig mit dem Halteelement 10a ausgebildet. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren. Die Windabweiserbefestigungselemente 50a, 52a weisen an ihren freien Enden 54a, 56a in voneinander abgewandte Richtungen. Ferner bilden die Windabweiserbefestigungselemente 50a, 52a zwei Kanalwandungen 58a, 60a, die an den Längsführungskanal 18a an einer wischleistenabgewandten Seite angrenzen. Die Windabweiserbefestigungselemente 50a, 52a sind im Bereich ihrer freien Enden 54a, 56a widerhakenförmig ausgebildet. Die Enden 54a, 56a sind in einem montierten Zustand von dem Windabweiserelement 14a umschlossen.

Zur Führung des Federelements 20a grenzen Seitenwandungen 66a, 68a des Längsführungskanals 18c an die Kanalwandungen 58a, 60a. Die Kanalwandungen 58a, 60a schließen dabei einen rechten Winkel mit den Seitenwandungen 66a, 68a ein. An die Seitenwandungen 66a, 68a ist ferner eine Zwischenwandung 70a angeordnet, die den Längsführungskanal 18a in Richtung der Wischleiste 16a abschließt. Die Seitenwandungen 66a, 68a erstrecken sich von der Zwischenwandung 70a aus in eine von der Wischleiste 16a abgewandte Richtung. Das Halteelement 10a weist eine Längsöffnung 72a auf, die den Längsführungskanal 16a zum Windabweiserelement 14a hin öffnet.

An der Zwischenwandung 70a sind zwei L-förmige Führungsprofile 74a, 76a des Halteelements 10a angeordnet. Die Führungsprofile 74a, 76a sind einstückig mit dem Halteelement 10a ausgebildet. Die Führungsprofile 74a, 76a weisen jeweils eine Seitenführung 78a, 80a und jeweils eine Vertikalführung 82a, 84a auf. Die Vertikalführungen 82a, 84a schließen mit den Seitenführungen 78a, 80a jeweils einen Winkel von 90° ein. Die Seitenführungen 78a, 80a schließen jeweils einen Winkel von 90° zur Zwischenwandung 70a ein. Die Führungsprofile 74a, 76a weisen an ihren freien Enden der Vertikalführungen 82a, 84a in einander zugewandte Richtungen. Die Führungsprofile 74a, 76a und die Zwischenwandung 70a bilden eine Kederschiene 86a, in welche die Wischleiste 16a in einem montierten Zustand eingeführt ist.

Das Halteelement 10a ist in einem Extrusionsverfahren einstückig aus Polypropylen hergestellt. Ein Fachmann wird in diesem Zusammenhang verschiedene, als sinnvoll erscheinende Kunststoffe in Erwägung ziehen, wie insbesondere Polyethylen, Polyamid, Polyvinylchlorid, Polycarbonat und/oder Polystyrol.

Das Halteelement 10a weist zwei Befestigungsausnehmungen 26a, 28a auf, die dazu vorgesehen sind, einen Formschluss mit einem Wischblattadapter 12a zu bilden (Figur 3). Die Befestigungsausnehmungen 26a, 28a sind in den Seitenwandungen 66a, 68a, die den Längsführungskanal 18a seitlich begrenzen, angeordnet.

Wie Figur 3 weiter zeigt, weist der Wischblattadapter 12a zwei Rastelemente 40a, 42a auf, die im montierten Zustand eine Bewegung des Wischblattadapters 12a relativ zum Halteelement 10a in Längsrichtung 22a vermeiden. Die Rastelemente 40a, 42a sind jeweils um eine Vertikalachse, die parallel zu einer Vertikalrichtung 44a verläuft, elastisch auslenkbar. Die Rastelemente 40a, 42a liegen am Federelement 20a seitlich an. Dabei greifen die Rastelemente 40a, 42a in Rastausnehmungen (nicht dargestellt) des Federelements 20a ein und vermeiden somit eine Bewegung des Wischblattadapters 12a relativ zum Federelement 20a in Längsrichtung 22a.

Die Wischvorrichtung umfasst zwei Sicherungsmittel 30a, 32a, welche die Rastelemente 40a, 42a im montierten Zustand sichern. Die Sicherungsmittel 30a, 32a sind einstückig mit dem Wischblattadapter 12a ausgebildet. Bei einer Montage werden die Rastelemente 40a, 42a zunächst in eine Wischrichtung 24a ausgelenkt. Das Halteelement 10a wird durch den Wischblattadapter 12a in Längsrichtung 22a geschoben. Sobald sich die Befestigungsausnehmungen 26a, 28a in Höhe der Rastelemente 40a, 42a befinden, greifen diese in die Befestigungsausnehmungen 26a, 28a ein und bilden einen Formschluss mit dem Halteelement 10a in Längsrichtung 22a. Die Sicherungsmittel 30a, 32a sind jeweils um eine Vertikalachse, die parallel zur Vertikalrichtung 44a verläuft, schwenkbar. Die Vertikalrichtung 44a erstreckt sich senkrecht zur Längsrichtung 22a und senkrecht zur Wischrichtung 24a. Somit steht die Vertikalrichtung 44a in einem Betriebszustand zumindest im Wesentlichen senkrecht zu einer zu wischenden Oberfläche (nicht dargestellt).

Bei einem Sicherungsvorgang werden die Sicherungsmittel 30a, 32a um die Vertikalachsen geschwenkt und greifen mit ihren freien Enden jeweils in eine Sicherungsnut 34a, 36a. Ein Zurückschwenken der Sicherungsmittel 30a, 32a wird dadurch vermieden. Die Sicherungsmittel 30a, 32a weisen mit ihren freien Enden in einander zugewandte Richtungen.

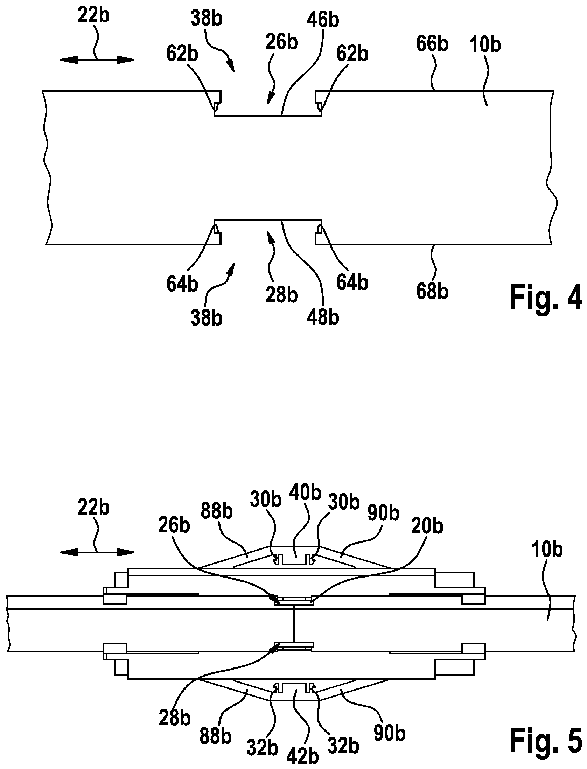

In den Figuren 4 bis 9 sind zwei weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des ersten Ausführungsbeispiels verwiesen werden kann. Zur Unterscheidung der Ausführungsbeispiele ist der Buchstabe a in den Bezugszeichen des Ausführungsbeispiels in den Figuren 1 bis 3 durch die Buchstaben b und c in den Bezugszeichen der Ausführungsbeispiele der Figuren 4 bis 9 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des ersten Ausführungsbeispiels verwiesen werden.

Figur 4 zeigt eine Draufsicht auf ein Halteelement 10b eines weiteren Ausführungsbeispiels der Wischvorrichtung. Das Halteelement 10b weist einen wie in Figur 2 gezeigten Querschnitt auf. Das Halteelement 10b weist zwei Befestigungsausnehmungen 26b, 28b auf, die, in einer Längsrichtung 22b betrachtet, auf gleicher Höhe angeordnet sind. Die Befestigungsausnehmungen 26b, 28b weisen jeweils eine t-förmige Kontur 38b auf. Eine seitliche Öffnung der jeweiligen Befestigungsausnehmung 26b, 28b weist dabei eine kleinere Längserstreckung auf als eine in der Befestigungsausnehmung 26b, 28b angeordnete Innenwandung 46b, 48b. Die Befestigungsausnehmungen 26b, 28b sind in Seitenwandungen 66b, 68b, die einen Längsführungskanal 18b seitlich begrenzen, angeordnet.

Ein Wischblattadapter 12b weist zwei Rastelemente 40b, 42b auf, welche in einem montierten Zustand seitlich am Federelement 20b anliegen und eine Bewegung des Wischblattadapters 12b relativ zum Federelement 20b in Längsrichtung 22b vermeiden (Figur 5). Die Rastelemente 40b, 42b greifen dabei in seitlich im Federelement 20b angeordnete Rastausnehmungen (nicht dargestellt). Die beiden Rastelemente 40b, 42b weisen jeweils zwei Rastarme 88b, 90b auf, die jeweils mit dem Wischblattadapter 12b verbunden sind. Die Rastarme 88b, 90b erstrecken sich in ihrer Haupterstreckungsrichtung parallel zur Längsrichtung 22b. Die Rastarme 88b, 90b sind einstückig mit dem Halteelement 10b ausgebildet.

Die Wischvorrichtung umfasst zwei Sicherungsmittel 30b, 32b, welche die Rastelemente 40b, 42b im montierten Zustand sichern. Die Sicherungsmittel 30b, 32b sind jeweils einstückig mit den Rastelementen 40b, 42b ausgebildet.

Bei einer Montage wird das Halteelement 10b in Längsrichtung 22b in den Wischblattadapter 12b eingeschoben. Sobald sich das Halteelement 10b in einer Montageposition befindet, werden die Rastelemente 40b, 42b in eine Wischrichtung 24b in die Befestigungsausnehmungen 26b, 28b bewegt. Dabei werden die Rastelemente 40b, 42b entgegen einer Federkraft bewegt. Die Rastelemente 40b, 42b greifen in die Befestigungsausnehmungen 26b, 28b ein und bilden einen Formschluss mit dem Halteelement 10b in Längsrichtung 22b.

Die Sicherungsmittel 30b, 32b sind jeweils um eine Vertikalachse, die parallel zu einer Vertikalrichtung 44b verläuft, elastisch auslenkbar. Die Vertikalrichtung 44b erstreckt sich senkrecht zur Längsrichtung 22b und senkrecht zur Wischrichtung 24b. Somit steht die Vertikalrichtung 44b in einem Betriebszustand zumindest im Wesentlichen senkrecht zu einer zu wischenden Oberfläche (nicht dargestellt). Die Sicherungsmittel 30b, 32b sind widerhakenförmig ausgebildet. Sind die Rastelemente 40b, 42b komplett in die Befestigungsausnehmungen 26b, 28b eingebracht, greifen die Sicherungsmittel 30b, 32 in die Befestigungsausnehmungen 26b, 28b und liegen an Rückwandungen 62b, 64b der Befestigungsausnehmungen 26b, 28b an. Eine Bewegung der Rastelemente 40b, 42b aus den Befestigungsausnehmungen 26b, 28b heraus ist somit vermieden.

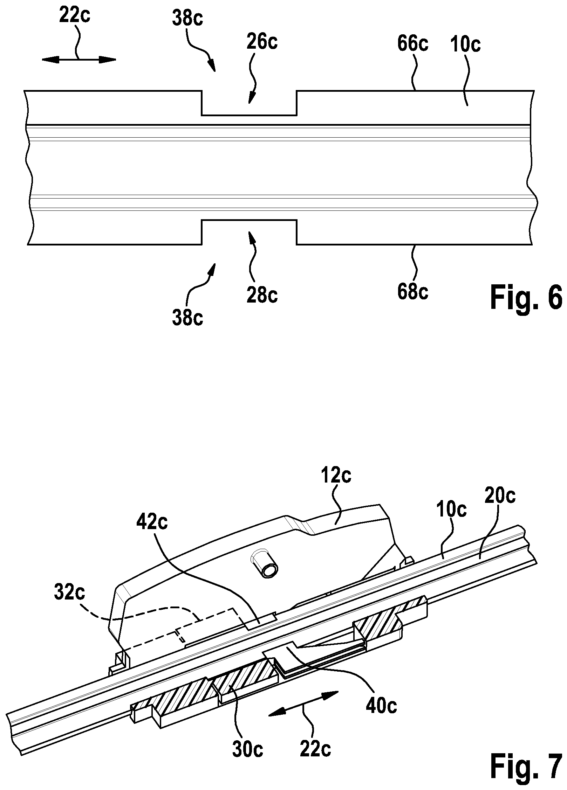

Figur 6 zeigt eine Draufsicht auf ein Halteelement 10c eines weiteren Ausführungsbeispiels der Wischvorrichtung. Das Halteelement 10c weist einen wie in Figur 2 gezeigten Querschnitt auf. Das Halteelement 10c weist zwei Befestigungsausnehmungen 26c, 28c auf, die, in einer Längsrichtung 22c betrachtet, auf gleicher Höhe angeordnet sind. Die Befestigungsausnehmungen 26c, 28c weisen jeweils eine rechteckige Kontur 38c auf. Die Befestigungsausnehmungen 26c, 28c sind in Seitenwandungen 66c, 68c, die einen Längsführungskanal 18c seitlich begrenzen, angeordnet.

Figur 7 zeigt eine perspektivische Darstellung des Halteelements 10c, welches in einen Wischblattadapter 12c eingeschoben ist. Der Wischblattadapter 12c ist in einem Teilschnitt dargestellt.

Der Wischblattadapter 12c weist zwei Rastelemente 40c, 42c auf, welche in einem montierten Zustand seitlich an einem Federelement 20c anliegen und eine Bewegung des Wischblattadapters 12c relativ zum Federelement 20c in Längsrichtung 22c vermeiden. Die Rastelemente 40c, 42c greifen dabei in seitlich im Federelement 20c angeordnete Rastausnehmungen. Die Rastelemente 40c, 42c sind einstückig mit dem Wischblattadapter 12c ausgebildet.

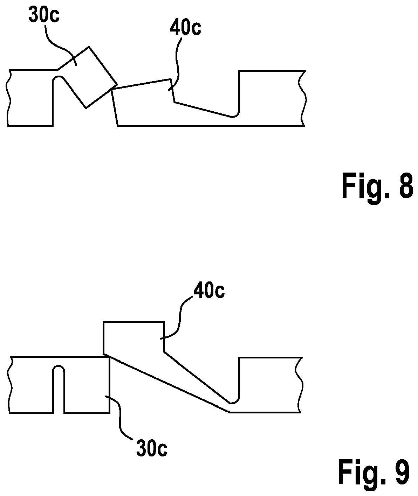

Die Wischvorrichtung umfasst Sicherungsmittel 30c, 32c, welche jeweils ein Rastelement 40c, 42c im montierten Zustand sichern. Die Sicherungsmittel 30c, 32c sind mit dem Rastelement 40c, 42c gekoppelt. Bei einem Auslenken der Rastelemente 40c, 42c kommen die Rastelemente 40c, 42c in Anlage mit den Sicherungsmitteln 30c, 32c und lenken diese dabei elastisch aus. In den Figuren 8 und 9 ist eine schematische Ansicht der Funktionsweise des Rastelements 40c und eines Sicherungsmittels 30c bei einem Montagevorgang gezeigt.

Bei einer Montage wird das Halteelement 10c in Längsrichtung 22c in den Wischblattadapter 12c eingeschoben. Sobald sich das Halteelement 10c in einer Montageposition befindet, werden die Rastelemente 40c, 42c in eine Wischrichtung 24c in die Befestigungsausnehmungen 26c, 28c bewegt. Dabei werden die Sicherungsmittel 30c, 32c zunächst entgegen einer Federkraft ausgelenkt. Die Rastelemente 40c, 42c greifen in die Befestigungsausnehmungen 26c, 28c ein und bilden einen Formschluss mit dem Halteelement 10c in Längsrichtung 22c. Die Sicherungsmittel 30c, 32c bewegen sich elastisch in eine Sicherungsposition, in welcher eine Bewegung der Rastelemente 40c, 42c aus den Befestigungsausnehmungen 26c, 28c heraus vermieden ist.

Die Sicherungsmittel 30c, 32c sind jeweils um eine Vertikalachse, die parallel zur Vertikalrichtung 44c verläuft, elastisch auslenkbar. Die Vertikalrichtung 44c erstreckt sich senkrecht zur Längsrichtung 22c und senkrecht zur Wischrichtung 24c. Somit steht die Vertikalrichtung 44c in einem Betriebszustand zumindest im Wesentlichen senkrecht zu einer zu wischenden Oberfläche (nicht dargestellt).

## Patentansprüche

1. Wischvorrichtung, insbesondere Kraftfahrzeugscheibenwischvorrichtung, mit einem Wischblattadapter (12a - 12c), der zumindest ein Rastelement (40a - 40c, 42a - 42c) aufweist, das dazu vorgesehen ist, in einem montierten Zustand eine Bewegung des Wischblattadapters (12a - 12c) relativ zu einem Halteelement (10a - 10c) in eine Längsrichtung (22a - 22c) zu vermeiden, mit zumindest einem Sicherungsmittel (30a - 30c, 32a - 32c), das dazu vorgesehen ist, das zumindest eine Rastelement (40a - 40c, 42a - 42c) in einem montierten Zustand zu sichern, **dadurch gekennzeichnet, dass** das zumindest eine Sicherungsmittel (30c, 32c) mit dem Rastelement (40c, 42c) gekoppelt ist, so dass bei einem Auslenken des Rastelements (40c, 42c) das Rastelement (40c, 42c) in Anlage mit dem zumindest einen Sicherungsmittel (30c, 32c) kommt und dieses dabei elastisch auslenkt.

2. Wischvorrichtung nach Anspruch 1, **dadurch gekennzeichnet, dass** das zumindest eine Rastelement (40a - 40c, 42a - 42c) an zumindest einem Federelement (20a - 20c) in einem montierten Zustand seitlich anliegt.

3. Wischvorrichtung nach Anspruch 1 oder 2, **dadurch gekennzeichnet, dass** das zumindest eine Rastelement (40a - 40c, 42a - 42c) dazu vorgesehen ist, bei einer Montage zumindest im Wesentlichen in eine Wischrichtung (24a - 24c) ausgelenkt zu werden.

4. Wischvorrichtung nach einem der vorhergehenden Ansprüche, **dadurch gekennzeichnet, dass** das zumindest eine Rastelement (40b, 42b) zumindest zwei Rastarme (88b, 90b) aufweist, die mit dem Wischblattadapter (12b) verbunden und dazu vorgesehen sind, federelastisch ausgelenkt zu werden.

5. Wischvorrichtung nach einem der vorhergehenden Ansprüche, **dadurch gekennzeichnet, dass** das zumindest eine Sicherungsmittel (30b, 32b) widerhakenförmig ausgebildet ist.

6. Wischvorrichtung nach einem der vorhergehenden Ansprüche, **gekennzeichnet durch** ein Halteelement (10a - 10c), das dazu vorgesehen ist, den Wischblattadapter (12a - 12c) mit einer Wischleiste (16a - 16c) und/oder einem Federelement (20a - 20c) zu koppeln.

7. Wischvorrichtung nach einem der vorhergehenden Ansprüche, **dadurch gekennzeichnet, dass** das Halteelement (10a - 10c) zumindest eine Befestigungsausnehmung (26a - 26c, 28a - 28c) aufweist, in die das zumindest eine Rastelement (40a - 40c, 42a - 42c) in einem montierten Zustand formschlüssig eingreift.

8. Wischvorrichtung nach Anspruch 7, **dadurch gekennzeichnet, dass** die Befestigungsausnehmungen (26a - 26c, 28a - 28c) zumindest teilweise in einer Seitenwandung (66a - 66c), die einen Längsführungskanal (18a - 18c) seitlich begrenzt, angeordnet sind.

## Claims

1. Wiping device, in particular a motor vehicle pane wiping device, having a wiper blade adapter (12a - 12c) which has at least one catch element (40a - 40c, 42a - 42c), which is provided to prevent a movement of the wiper blade adapter (12a - 12c) relative to a retention element (10a - 10c) in a longitudinal direction (22a - 22c) in an assembled state, having at least one securing means (30a - 30c, 32a - 32c) which is provided to secure the at least one catch element (40a - 40c, 42a - 42c) in an assembled state,
**characterized in that** the at least one securing means (30c, 32c) is coupled to the catch element (40c, 42c) so that, when the catch element (40c, 42c) is redirected, the catch element (40c, 42c) moves into abutment with the at least one securing means (30c, 32c) and resiliently redirects it.

2. Wiping device according to Claim 1, **characterized in that** the at least one catch element (40a - 40c, 42a - 42c) is in lateral abutment with at least one resilient element (20a - 20c) in an assembled state.

3. Wiping device according to Claim 1 or Claim 2, **characterized in that** at least one catch element (40a - 40c, 42a - 42c) is provided to be redirected at least substantially in a wiping direction (24a - 24c) during an assembly operation.

4. Wiping device according to one of the preceding claims, **characterized in that** the at least one catch element (40b, 42b) has at least two catch arms (88b, 90b) which are connected to the wiper blade adapter (12b) and which are provided to be resiliently redirected.

5. Wiping device according to one of the preceding claims, **characterized in that** the at least one securing means (30b, 32b) is constructed in a barb-like manner.

6. Wiping device according to one of the preceding claims, **characterized by** a retention element (10a - 10c) which is provided to couple the wiper blade adapter (12a - 12c) to a wiper strip (16a - 16c) and/or a resilient element (20a - 20c).

7. Wiping device according to one of the preceding claims, **characterized in that** the retention element (10a - 10c) has at least one securing recess (26a - 26c, 28a - 28c) in which the at least one catch element (40a - 40c, 42a - 42c) engages in a positive-locking manner in an assembled state.

8. Wiping device according to Claim 7, **characterized in that** the securing recesses (26a - 26c, 28a - 28c) are at least partially arranged in a side wall (66a - 66c) which laterally delimits a longitudinal guiding channel (18a - 18c) .

## Revendications

1. Dispositif d'essuyage, en particulier dispositif d'essuie-glace pour véhicule automobile, avec un adaptateur de balai d'essuie-glace (12a - 12c), qui présente au moins un élément d'encliquetage (40a - 40c, 42a - 42c), qui est prévu pour éviter, dans un état monté, un mouvement de l'adaptateur de balai d'essuie-glace (12a - 12c) par rapport à un élément de maintien (10a - 10c) dans une direction longitudinale (22a - 22c), avec au moins un moyen de fixation (30a - 30c, 32a - 32c), qui est prévu pour fixer dans un état monté ledit au moins un élément d'encliquetage (40a - 40c, 42a - 42c), **caractérisé en ce que** ledit au moins un moyen de fixation (30c, 32c) est couplé à l'élément d'encliquetage (40c, 42c), de telle manière que lors d'une déviation de l'élément d'encliquetage (40c, 42c) l'élément d'encliquetage (40c, 42c) vienne s'appuyer sur ledit au moins un moyen de fixation (30c, 32c) et dévie ainsi celui-ci de façon élastique.

2. Dispositif d'essuyage selon la revendication 1, **caractérisé en ce que** ledit au moins un élément d'encliquetage (40a - 40c, 42a - 42c) s'applique latéralement dans un état monté sur au moins un élément de ressort (20a - 20c).

3. Dispositif d'essuyage selon la revendication 1 ou 2, **caractérisé en ce que** ledit au moins un élément d'encliquetage (40a - 40c, 42a - 42c) est prévu pour être dévié lors d'un montage au moins essentiellement dans une direction d'essuyage (24a - 24c).

4. Dispositif d'essuyage selon l'une quelconque des revendications précédentes, **caractérisé en ce que** ledit au moins un élément d'encliquetage (40b, 42b) présente au moins deux bras d'encliquetage (88b, 90b), qui sont reliés à l'adaptateur de balai d'essuie-glace (12b) et qui sont prévus pour être déviés élastiquement.

5. Dispositif d'essuyage selon l'une quelconque des revendications précédentes, **caractérisé en ce que** ledit au moins un moyen de fixation (30b, 32b) est réalisé en forme de barbillon.

6. Dispositif d'essuyage selon l'une quelconque des revendications précédentes, **caractérisé par** un élément de maintien (10a - 10c), qui est prévu pour coupler l'adaptateur de balai d'essuie-glace (12a - 12c) à un bras d'essuie-glace (16a - 16c) et/ou à un élément de ressort (20a - 20c).

7. Dispositif d'essuyage selon l'une quelconque des revendications précédentes, **caractérisé en ce que** l'élément de maintien (10a - 10c) présente au moins un évidement de fixation (26a - 26c, 28a - 28c), dans lequel ledit au moins un élément d'encliquetage (40a - 40c, 42a - 42c) s'engage par emboîtement dans un état monté.

8. Dispositif d'essuyage selon la revendication 7, **caractérisé en ce que** les évidements de fixation (26a - 26c, 28a - 28c) sont disposés eu moins en partie dans une paroi latérale (66a - 66c), qui limite latéralement un canal de guidage longitudinal (18a - 18c).
